# EUROPÄISCHE PATENTANMELDUNG

(11) **EP 1 280 257 A1**
(43) Veröffentlichungstag der Anmeldung: **29.01.2003**
(21) Anmeldenummer: 02405593.1
(22) Anmeldetag: 12.07.2002
(51) Int. Cl.: H02K 9/197

(54) **Generator zur Erzeugung hoher Spannungen**

(30) Priorität: 23.07.2001 CH 13642001
(71) Anmelder: ALSTOM (Switzerland) Ltd, 5401 Baden (CH)
(72) Erfinder: Blatter, Richard, 5408 Ennetbaden (CH); Joho, Reinhard, 5022 Rombach (CH)

(57) **Zusammenfassung**

Ein Generator (10) zur Erzeugung hoher Spannungen umfasst einen um eine Drehachse (18) drehbar gelagerten Rotor (12), der von einem Stator (11) umgeben ist, in dessen Blechkörper (28) eine aus isolierten Kabeln gebildete Statorwicklung (15) angeordnet ist, die innerhalb des Blechkörpers (28) axial verläuft und ausserhalb des Blechkörpers (28) stirnseitig Wickelköpfe (16) bildet. Bei einem solchen Generator wird dadurch die Kühlung verbessert und die Feldsteuerung in und zwischen den Kabeln vereinfacht, dass der Stator (11) mit dem Blechkörper (28) und der Statorwicklung (15) in einem flüssigkeitsdicht geschlossenen, den Rotor (12) aussparenden Gehäuse (13) untergebracht ist, und dass der Innenraum (14) des Gehäuses (13) mit einer Kühlflüssigkeit gefüllt ist.

## Beschreibung

### TECHNISCHES GEBIET

Die vorliegende Erfindung bezieht sich auf das Gebiet der Stromerzeugung. Sie betrifft einen Generator zur Erzeugung hoher Spannungen gemäss dem Oberbegriff des Anspruchs 1. Als hohe Spannungen gelten dabei solche Spannungen, die oberhalb der üblichen 10 bis 25 kV liegen.

### STAND DER TECHNIK

Ein solcher Generator ist z.B. aus der Druckschrift WO-A2-97/45919 bekannt.

Es sind Generatoren mit statorseitiger indirekter Flüssigkeitskühlung aus dem Stand der Technik bekannt, bei denen Oel als Wärmeträger und Isoliermedium verwendet wird. Solche Lösungen werden beispielsweise in den Druckschriften CH-A5-663120, DE-C2-29 15 390 und DE-A1-33 37 632 beschrieben.

Es sind weiterhin kabelisolierte Generatoren bekannt, bei welchen der Statorleiter im Wickelkopf luftgekühlt ist, die Abfuhr der Verlustwärme des Statorpaketes aber über einen separaten Wasserkreislauf erfolgt. Bei Generatoren mit masseisolierten Kabeln in der Generatorwicklung erfolgt die Feldsteuerung der Isolation dabei durch einen geerdeten halbleitenden Belag an der Aussenoberfläche des Kabels (siehe z.B. den Artikel von M. Leijon, Powerformer - a radically new rotating machine, ABB Review 2 (1998)).

Problematisch ist bei diesen bekannten kabelisolierten Generatoren, dass die Verlustwärme im Statorpaket und der Wickelköpfe durch verschiedene Wärmeträger abgeführt wird. Weiterhin ist es schwierig, die feldsteuernde halbleitende Schicht der Kabelwicklung gleichmässig zu erden, damit eine optimale Feldsteuerung sichergestellt ist.

### DARSTELLUNG DER ERFINDUNG

Es ist daher Aufgabe der Erfindung, einen kabelisolierten Generator zu schaffen, der die Nachteile der bekannten Lösungen vermeidet und insbesondere eine durchgehende gleichmässige Kühlung des Stators und eine optimale Feldsteuerung bei Kabeln der Statorwicklung ermöglicht.

Die Aufgabe wird durch die Gesamtheit der Merkmale des Anspruchs 1 gelöst. Der Kern der Erfindung besteht darin, den gesamten Stator mit dem Blechkörper und der Statorwicklung (einschliesslich der Wickelköpfe) in einem flüssigkeitsdicht geschlossenen, den Rotor aussparenden Gehäuse unterzubringen, wobei der Innenraum des Gehäuses mit einer Kühlflüssigkeit gefüllt ist. Die Kühlflüssigkeit erfüllt mehrere Hauptfunktionen: Die im Statorpaket erzeugte Verlustwärme wird über die Oberfläche des Statorpaketes (und ggf. entsprechend ausgebildete Öffnungen im Blechkörper durch die zirkulierende Kühlflüssigkeit abgeführt. Die Verlustwärme im Wickelkopf wird ebenfalls über die Kühlflüssigkeit abgeführt. Sowohl die isolierten Leiter als auch der Statorkern sind durch ein einziges Kühlmedium mit der tiefstmöglichen Temperatur umströmt; es gibt keine weiteren Wärmeübergänge, welche leistungsbegrenzend wirken. Die Wärmespeicherkapazität der Kühlflüssigkeit kann sich vorteilhaft auf die Kurzzeitbelastbarkeit des Generators auswirken; diese wird erhöht.

Bevorzugt wird als Kühlflüssigkeit Wasser verwendet, wobei Mittel vorgesehen sind, welche eine Korrosion des Blechkörpers des Stators verhindern. Die korrosionsverhindernden Mittel umfassen insbesondere eine Imprägnierung des Blechkörpers. Es kann dem Wasser im Gehäuse aber auch zusätzlich ein korrosionsverhindernder Inhibitor beigegeben sein.

Bevorzugt weisen die Kabel der Statorwicklung eine feste Isolation auf, und hat die Kühlflüssigkeit zur Steuerung des elektrischen Feldes bzw. der Feldverteilung in der Isolation eine vorgegebene elektrische Leitfähigkeit. Die Feldsteuerung der Kabelisolation muss also nicht mehr über einen geerdeten, auf dem Kabel aufgebrachten Halbleiterbelag erfolgen, sondern kann über die entsprechend regulierte elektrische Leitfähigkeit der Kühlflüssigkeit erfolgen. Die Feldverteilung in der Isolation wird dadurch sehr homogen, da das Potential an der Kabeloberfläche gleichförmig an Erde liegt (im Wickelkopf werden Potentialdifferenzen zwischen den Kabeloberflächen sich kreuzender Kabel wirksam abgebaut).

Einer Beeinflussung der Isolationseigenschaften des Leiterkabels durch das Wasser muss speziell Rechnung getragen werden. Dies kann vorteilhaft dadurch erreicht werden, dass der oberflächliche Halbleiterbelag imprägniert ist und/oder die Oberfläche der Kabelisolation der Statorwicklung einen Schutzbelag aufweist. Dies kann z.B. durch eine Silikonbeschichtung geschehen.

Grundsätzlich ergibt sich durch die ungleichmässige Wärmeverteilung im Gehäuse eine eigenständige Zirkulation der Kühlflüssigkeit (des Wassers). Darüber hinaus kann jedoch zur Verstärkung der Zirkulation der Kühlflüssigkeit eine Zirkulationspumpe im Gehäuse vorgesehen sein.

Die Wärmeabfuhr aus dem Stator wird weiter verbessert, wenn im Blechkörper des Stators zusätzliche Oeffnungen vorgesehen sind, durch welche die Kühlflüssigkeit strömt.

Zweckmässigerweise wird der Kühlflüssigkeit über einen Kühler Wärme entzogen.

Kabelverbindungen werden bevorzugt ausserhalb des Flüssigkeitsraumes angeordnet. Dazu werden die Kabel über an sich bekannte Dichtelemente aus dem Gehäuse herausgeführt.

### KURZE ERLÄUTERUNG DER FIGUREN

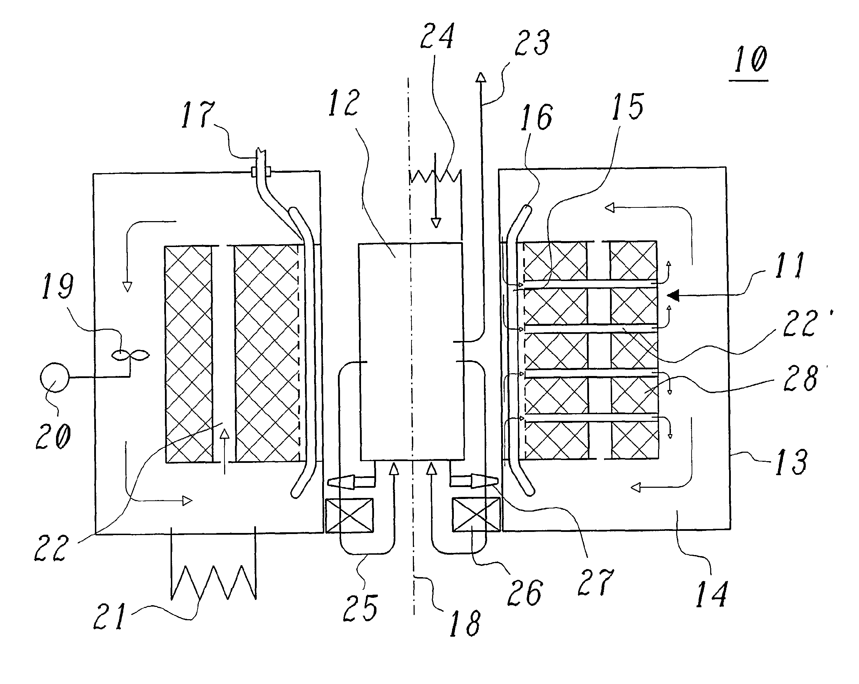

Die Erfindung soll nachfolgend anhand von Ausführungsbeispielen im Zusammenhang mit der Zeichnung näher erläutert werden. Die einzige Figur zeigt in einer vereinfachten schematischen Darstellung im Längsschnitt einen Generator gemäss einem bevorzugten Ausführungsbeispiel der Erfindung.

### WEGE ZUR AUSFÜHRUNG DER ERFINDUNG

In der Figur ist in einer vereinfachten schematischen Darstellung im Längsschnitt ein Generator 10 zur Erzeugung hoher Spannungen gemäss einem bevorzugten Ausführungsbeispiel der Erfindung dargestellt. Der Generator 10 umfasst einen (zentralen), um eine Drehachse 18 drehbar gelagerten Rotor 12, der aussen von einem Stator 11 (koaxial) umgeben ist. Der Stator 11 besteht im wesentlichen aus einem Blechkörper 28, mit entsprechenden axialen Schlitzen, in denen eine aus einem isolierten Hochspannungskabel gebildete Statorwicklung 15 untergebracht ist. Die Statorwicklung 15 bildet an den beiden Stirnseiten ausserhalb des Blechkörpers 28 jeweils einen Wickelkopf 16. Zur Abnahme der in der Statorwicklung 15 induzierten Hochspannung sind Generatorableitungen 17 vorgesehen.

Der Stator 11 mit dem Blechkörper 28 und der Statorwicklung 15 einschliesslich der Wickelköpfe 16 ist in einem flüssigkeitsdicht abgeschlossenen Gehäuse 13 angeordnet, dessen Innenraum 14 mit aufbereitetem Wasser als Kühlflüssigkeit gefüllt ist. Andere Kühlflüssigkeiten als Wasser sind ebensogut denkbar. Das Gehäuse 14 nimmt den Rotor 12 aus und ist gegenüber dem Rotor ebenfalls abgeschlossen, so dass der Rotor 12 mit einer eigenständigen Gaskühlung betrieben werden kann. Eine solche Gaskühlung kann - wie in der Figur durch Pfeile angedeutet - entweder einen geschlossenen Kühlkreislauf 25 umfassen, der durch eine Beschaufelung 27 am Rotor 12 in Gang gehalten wird und die Wärme aus dem Kühlmedium mittels in den Kreislauf eingeschalteten Kühlern 26 abführt (untere Hälfte des Rotors 12 in der Figur). Es kann aber auch ein offener Kühlkreislauf 23 (offene Ventilation) vorgesehen sein, bei dem das von aussen zuströmende Kühlmedium durch entsprechende Filtermatten 24 geschickt wird (obere Hälfte des Rotors 12 in der Figur).

Die im Innenraum 14 zirkulierende Kühlflüssigkeit Wasser wird vorzugsweise durch eine Zirkulationspumpe 19, die von einem Antriebsmotor 20 angetrieben wird, in Richtung der Strömungspfeile bewegt, um eine gleichmässige und kräftige Zirkulation zu gewährleisten. Die Kühlflüssigkeit strömt an den Oberflächen des Blechkörpers 28 entlang und durch die Wickelköpfe 16 der Statorwicklung 15 sowie in axialer Richtung in den Schlitzen des Blechkörpers 28 an den axialen Abschnitten (Kabeln) der Statorwicklung 15 entlang. Die Wärmeabfuhr aus dem Blechkörper 28 wird weiter verbessert, wenn zusätzliche Oeffnungen 22 im Blechkörper 28 vorgesehen werden. Die von der Kühlflüssigkeit aufgenommene Wärme wird mittels eines, vorzugsweise externen, Kühlers 21 abgeführt. Anstelle der Oeffnungen 22 können auch radiale Schlitze 22' zur Zirkulation der Kühlflüssigkeit im Blechkörper 28 dienen.

Im weiteren ist der Eisenteil (der Blechkörper 28) des Stators 11 so imprägniert, dass er keiner Korrosion durch die Kühlflüssigkeit ausgesetzt ist; es kann auch zusätzlich ein korrosionsverhindernder Inhibitor der Flüssigkeit beigegeben werden. Das Gehäuse 13 wird mit aufbereitetem Wasser gefüllt, dessen elektrische Leitfähigkeit speziell eingestellt ist. Die Feldsteuerung der Kabelisolation in der Statorwicklung 15 muss nicht mehr zwingend - wie beim eingangs genannten Stand der Technik - über einen geerdeten auf dem Kabel aufgebrachten Halbleiterbelag erfolgen, sondern kann über die entsprechend regulierte elektrische Leitfähigkeit der Kühlflüssigkeit (des Wassers) realisiert werden. Die Feldverteilung in der Isolation wird dadurch sehr homogen, da das Potential an der Kabeloberfläche gleichförmig an Erde liegt. Einer Beeinflussung der Isolationseigenschaften des Leiterkabels durch das Wasser muss speziell Rechnung getragen werden, z.B. durch einen Silikonbelag an der Kabeloberfläche.

### BEZUGSZEICHENLISTE

- 10: Generator
- 11: Stator
- 12: Rotor
- 13: Gehäuse (geschlossen)
- 14: Innenraum (Gehäuse)
- 15: Statorwicklung (Kabel)
- 16: Wickelkopf
- 17: Generatorableitung
- 18: Drehachse
- 19: Zirkulationspumpe
- 20: Antriebsmotor
- 21: Kühler
- 22,22': Oeffnung (im Blechkörper)
- 23: Kühlkreislauf (offen)
- 24: Filtermatte
- 25: Kühlkreislauf (geschlossen)
- 26: Kühler
- 27: Beschaufelung
- 28: Blechkörper (Stator)

## Patentansprüche

1. Generator (10) zur Erzeugung hoher Spannungen, welcher Generator (10) einen um eine Drehachse (18) drehbar gelagerten Rotor (12) umfasst, der von einem Stator (11) umgeben ist, in dessen Blechkörper (28) eine aus isolierten Kabeln gebildete Statorwicklung (15) angeordnet ist, die innerhalb des Blechkörpers (28) axial verläuft und ausserhalb des Blechkörpers (28) stirnseitig Wickelköpfe (16) bildet, **dadurch gekennzeichnet, dass** der Stator (11) mit dem Blechkörper (28) und der Statorwicklung (15) in einem flüssigkeitsdicht geschlossenen, den Rotor (12) aussparenden Gehäuse (13) untergebracht ist, und dass der Innenraum (14) des Gehäuses (13) mit einer Kühlflüssigkeit gefüllt ist.

2. Generator nach Anspruch 1, **dadurch gekennzeichnet, dass** die Kabel der Statorwicklung (15) eine feste Isolation aufweisen, und dass zur Steuerung des elektrischen Feldes bzw. der Feldverteilung in der Isolation die Kühlflüssigkeit eine vorgegebene elektrische Leitfähigkeit aufweist.

3. Generator nach einem der Ansprüche 1 bis 2, **dadurch gekennzeichnet, dass** eine Zirkulationspumpe (19) zur Verstärkung der Zirkulation der Kühlflüssigkeit im Gehäuse (13) vorgesehen ist.

4. Generator nach einem der Ansprüche 1 bis 3, **dadurch gekennzeichnet, dass** im Blechkörper (28) des Stators (11) zusätzliche Oeffnungen (22, 22') vorgesehen sind, durch welche die Kühlflüssigkeit strömt.

5. Generator nach einem der Ansprüche 1 bis 4, **dadurch gekennzeichnet, dass** der Kühlflüssigkeit über einen Kühler (21) Wärme entzogen wird.

6. Generator nach einem der Ansprüche 1 bis 5, **dadurch gekennzeichnet, dass** als Kühlflüssigkeit Wasser verwendet wird, und dass Mittel vorgesehen sind, welche eine Korrosion des Blechkörpers (28) des Stators (11) verhindern.

7. Generator nach Anspruch 6, **dadurch gekennzeichnet, dass** die korrosionsverhindernden Mittel eine Imprägnierung des Blechkörpers (28) umfassen.

8. Generator nach Anspruch 6, **dadurch gekennzeichnet, dass** dem Wasser im Gehäuse (13) ein korrosionsverhindernder Inhibitor beigegeben ist.

9. Generator nach Anspruch 6, **dadurch gekennzeichnet, dass** die Oberfläche des Kabels der Statorwicklung (15) eine Imprägnierung gegen Eindringen von Wasser aufweist.
